Europäisches Patentamt

European Patent Office

Office européen des brevets

(11) Publication number: 0 605 751 A1

# EUROPEAN PATENT APPLICATION

(21) Application number: 93102245.3

(22) Date of filing: 12.02.93

(51) Int. Cl.⁵: G06F 13/38, G06F 1/08

(30) Priority: 08.12.92 JP 328112/92

(43) Date of publication of application:
13.07.94 Bulletin 94/28

(84) Designated Contracting States:
DE FR GB

(71) Applicant: MITSUBISHI DENKI KABUSHIKI
KAISHA
2-3, Marunouchi 2-chome
Chiyoda-ku
Tokyo 100(JP)

(72) Inventor: Matsubara, Toshiyuki, c/o Mitsubishi
Electric
Semiconductor Software Corp.,
1-17, Chuo 3-chome
Itami-shi, Hyogo 664(JP)

(74) Representative: Tiedtke, Harro, Dipl.-Ing.
Patentanwaltsbüro
Tiedtke-Bühling-Kinne & Partner
Bavariaring 4
D-80336 München (DE)

(54) Uart and system using the same.

(57) The present invention provides a microcomputer which realizes a baud rate at sampling rates of multiples of at least two different numbers.

The microcomputer contains a sampling rate selection register for storing a division value specified by a CPU, and a sampling rate selection circuit for dividing the sampling signal generated from a baud rate generator by a division value set in the sampling rate selection register so that the sampling rate of the sampling signal supplied to a shift register can be switched within the range of multiples of at least two different numbers.

FIG. I

## BACKGROUND OF THE INVENTION

### Field of the Invention

The present invention relates to a UART (Universal Asynchronous Receiver/Transmitter) and a system using the UART serving as an input/output control circuit for controlling a baud rate during serial data transmission and receiving to and from the outside, and a system realized by using the UART.

### Description of the Related Art

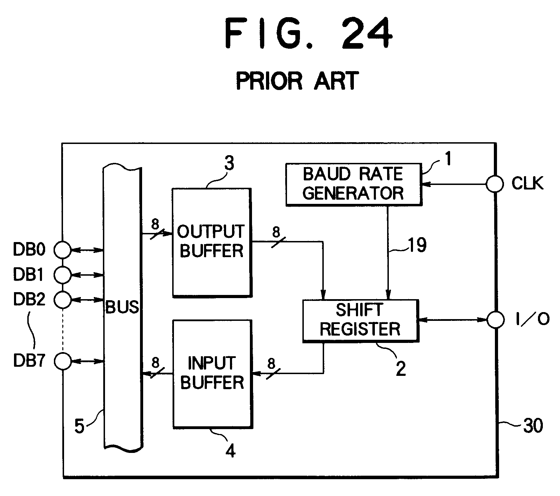

Fig. 24 is a functional block diagram showing a conventional 8-bit UART. In Fig. 24, reference numeral 30 denotes a UART; reference numeral 1, a baud rate generator; reference numeral 2, a shift register; reference numeral 3, an output buffer; reference numeral 4, an input buffer; reference numeral 5, a bus; and reference numeral 19, a sampling signal. CLK denotes a clock terminal, I/O denotes an input/output terminal, and DB1 to DB7 respectively denote connecting terminals for connecting various devices.

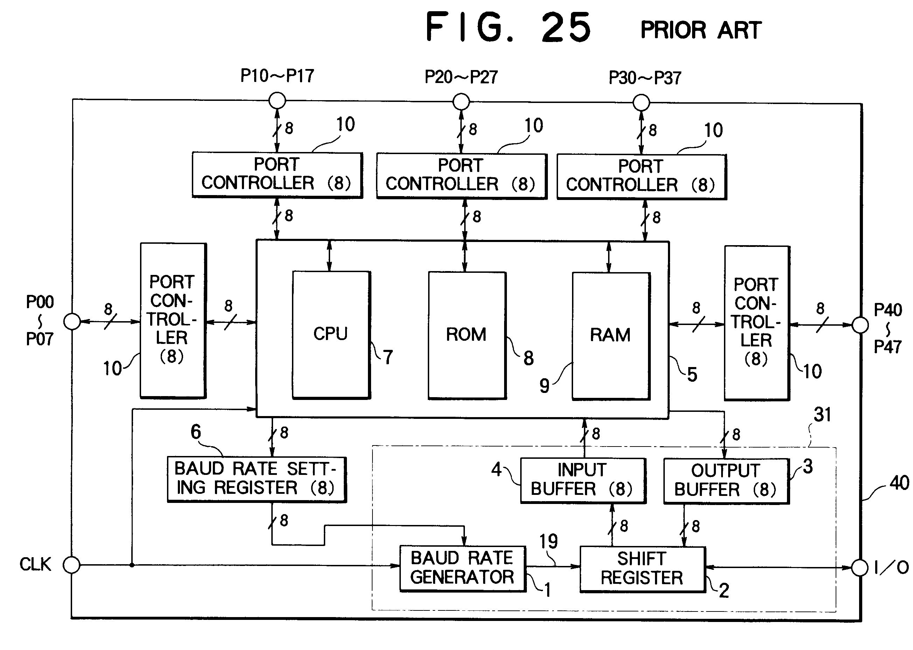

Fig. 25 is a functional block diagram showing a conventional 8-bit microcomputer. In Fig. 25, reference numeral 40 denotes a microcomputer; reference numeral 6, a register for setting a baud rate; reference numeral 7, a CPU; reference numeral 8, a ROM; reference numeral 9, a RAM; reference numeral 10, a port controller for parallel transmission; and reference numeral 31, a UART. The UART 31 is substantially the same as the UART 30 shown in Fig. 24, but it is different in the point that a baud rate generator 1a generates a sampling signal 19 in accordance with the baud rate set by a baud rate setting register 6. Five port controllers 10 are provided and are respectively connected to port sections P00 to P07 for 8-bit parallel transmission.

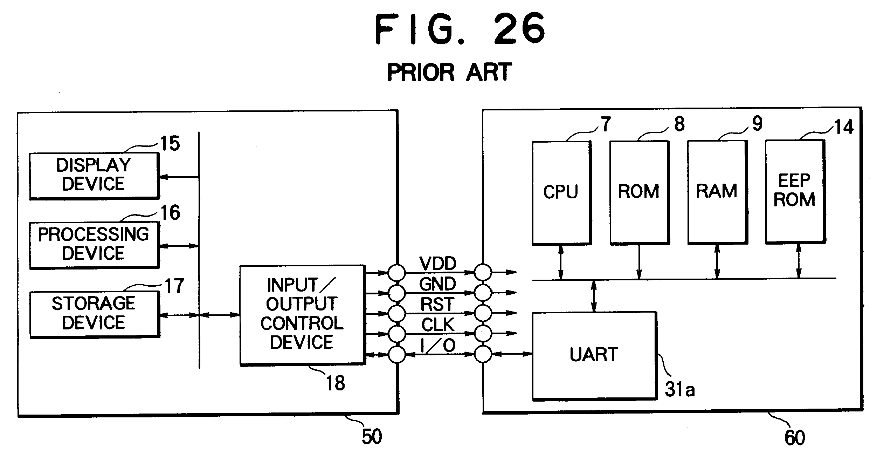

Fig. 26 is a block diagram showing the configuration of a IC card system provided with a conventional UART. In Fig. 26, reference numeral 50 denotes a system section; reference numeral 60, an IC card containing a UART; reference numeral 31a, a UART; reference numeral 14, a EEPROM; reference numeral 15, a display device; reference numeral 16, a processing device; reference numeral 17, a storage device; and reference numeral 18, an input/output control device. VDD denotes a power supply voltage; GND, a ground signal; RST, a reset signal; CLK, a clock signal; and I/O, input/output data. The UART 31a includes sections corresponding to the baud rate generator 1a, the shift register 2, the output buffer 3, the input buffer 4 and the baud rate setting register 6, all of which are shown in Fig. 25.

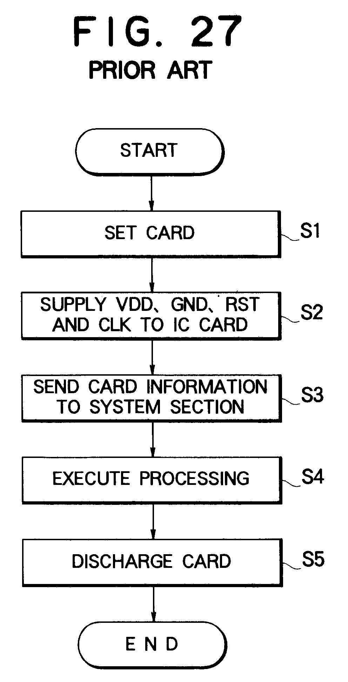

Fig. 27 is a flow chart showing the operation of the IC card system shown i Fig. 26.

The operation is described below. The basic operation of the conventional UART shown in Fig. 24 is first described below. The UART 30 controls serial data input and output to and from the outside thereof through the input/output terminal I/O. When data is output through the input/output terminal I/O, data is written in the output buffer 3 from the bus 5, and is then transmitted to the shift register 2. During the above processing, the data is parallel data. The data transmitted to the shift register 2 is serially output to the outside through the input/output terminal I/O with the timing of the sampling signal 19 sent from the baud rate generator 1. In contrary, when data is input, the serial data input through the input/output terminal I/O with the timing of the sampling signal 19 is sampled and input to the shift register 2. When the input of data having a predetermined length is completed, the data is transferred as parallel data to the input buffer 4 and is then output to the bus 5. During this processing, the baud rate is determined by the sampling signal 19 obtained by dividing the frequency of the clock signal CLK input from the outside through the clock terminal CLK by a predetermined fixed division value. The sampling signal 19 is supplied to the shift register 2 so that data is input at a predetermined baud rate. For example, when the division value of the baud rate generator 1 is set to 512, and when the clock signal CLK of 4.9152 MHz is input, data is input and output to and from the outside at a baud rate of 9600 bps (bits/sec.). The baud rate of 9600 bps is frequently used in usual data transmission. The baud rate generator 1 shapes the waveform of the clock signal CLK.

A description will now be made of the control of the baud rate during serial data input and output performed by a microcomputer provided with the conventional UART shown in Fig. 25. The microcomputer 40 uses two types of data transmission and receiving in accordance with the processing program stored in the ROM 8 by control of the CPU 7. The two types of data transmission and receiving include a type in which data is parallel transmitted and received to and from the outside through the port controllers 10, and a type in which data is serially transmitted and received through the shift register 2. When data is serially transmitted and received, a microcomputer having the function to change a baud rate is employed. In this case, the clock signal CLK is divided by a division value which is the product of any desired division value set in the 8-bit baud rate setting register by the CPU 7 and the fixed division value previously set in the baud rate generator 1a to generate the sampling signal 19. The shift register 2 determines the baud rate of data transmission and receiving to and from the outside with the timing of the sampling signal 19 supplied thereto. For example, when the fixed division value of the baud rate generator 1a is set to "16", and when the clock signal CLK of 4.9152 MHz is input from the outside, the baud rate is set to 9600 bps by setting "32" in the baud rate setting register 6. Since values which can be set in the 8-bit baud rate setting register 6 are within the range of 0 to 255, and since a sampling rate is generally a multiple of 8, the division value of the baud rate generator 1a is frequently fixed to a multiple of 8.

A description will now be made of the basic operation of an IC card system provided with a conventional UART with reference to Figs. 26 and 27. In Fig. 26, the system section 50 is connected to the IC card 60 trough five terminals for the power supply voltage VDD, the ground signal GND, the reset signal RST, the clock signal CLK and the input/output data I/O, and data is serially transmitted and received through the input/output terminals I/O. The system section 50 comprises the processing device 16, for example, comprising a computer or the like, for processing the data sent from the IC card 60, the storage device 17 for storing processing results and the like, the display device 15 for displaying the results and the like, the input/output control device 18 for controlling data input and output to and from the IC card 60 and so on. The input/output control device 18 comprises a reader/writer or the like and is frequently connected to the processing device 16 (computer) through a communication line. The IC card 60 comprises the CPU 7 for processing data, the ROM 8 for storing a processing program, the RAM 9 for temporarily storing data, the EEPROM 14 for constantly storing information about the attribute of a card, the results of data processing and the like, and the UART 31a for controlling serial data transmission. Data is serially transmitted and received to and from the system section 50 through the input/output terminals I/O.

The operation of the IC card system is described below with reference to Fig. 27. The IC card 60 is first set in the system section 50 (Step S1). The power supply voltage VDD, the ground potential GND, the reset signal RST, and the clock signal CLK are then supplied to the IC card 60 from the side of the system section 50 (Step S2). Information about the attribute of the card is then transmitted to the system section 50 from the IC card 60 (Step S3). The information about the attribute of the card is mainly used for deciding whether or not the card can be used in this system, and includes, for example, the baud rate for data input and output to and from the card and the like. When it is decided from the transmitted information about the card attribute that the IC card 60 can be used, the system section 50 starts execution of processing (Step S4). After processing is completed, the card is discharged (Step S5), and the operation is stopped.

The conventional UART configured as described above can transmit and receive data at only one baud rate during input of the clock signal CLK having a predetermined frequency. If the baud rate of another device connected to the UART is limited, the clock signal CLK having a frequency which can be set to that baud rate must be input to the UART.

Although, in the control of the baud rate by a conventional microcomputer, the baud rate can be changed within the range of multiples of the fixed division value of the baud rate generator by setting any desired value in the 8-bit baud rate setting register, there is the problem that the baud rate cannot be set to other values. Thus, a baud rate other than a multiple of 16 cannot be set by a conventional microcomputer. When a baud rate other than a multiple of 16, for example, a multiple of 12, is required, there is the problem that another microcomputer which can realize a baud rate of a multiple of 12 is required. In addition, although the baud rate can be set to many multiples by decreasing the fixed division value of the baud rate generator (for example, "2"), since the range of division values which can be set by the 8-bit baud rate setting register is limited, the range of baud rate values which can be set is finally narrowed, thereby causing the problem with respect to deterioration in the practicability.

Further a conventional IC card system which is realized by an IC card in which a baud rate can be set to only a multiple of a certain value and a system section has the problem that the frequency of the clock signal CLK used in the system is fixed by a limitation of the baud rate. There is thus the problem that a plurality of IC cards and system sections which are operated with different frequencies cannot be easily operated in a common IC card system. Particularly, in regard to recent IC card systems, the development of a system in which various IC card systems can be driven together is promoted, and it is preferable that IC card systems having various specifications are driven on the same system. However, the conventional IC card and systems have the functional problem that specifications such as a baud rate and the like must be standardized.

In the background where the above problems are produced, there are two types of systems including a system in which a clock signal of 4.9152 MHz is divided by 512 to realize a baud rate of 9600 bps, and a system in which a clock signal CLK of 3.5712 MHz is divided by 372 to realize a baud rate of 9600 bps. There is a demand for providing the two systems with compatibility therebetween.

The above-described conventional UART, microcomputer and IC card system belong to the system in which a clock signal CLK of 4.9152 MHz is divided by 512 to realize a baud rate of 9600 bps. Since the division value of the baud rate generator is a multiple of 8, 512 division can be realized. The baud rate can also be doubled to 19200 bps for data transmission and receiving. However, when the division value of the baud rate generator is a multiple of 8, 372 division of the other system cannot be realized. It is thus impossible to provide the two systems having different division values with compatibility therebetween.

## SUMMARY OF THE INVENTION

The present invention has been achieved for solving the above problems, and an object of the present invention is to provide a UART, a microcomputer, an IC card, a reader/writer and an IC card system which are capable of transmitting and receiving data at a sampling rate which can be set to multiples of at least two different values so as to provide systems having different baud rate setting methods (different specifications) with compatibility therebetween.

In order to achieve the object, a first invention relates to a UART for setting a baud rate by diving the clock signal input thereto from the outside. The UART comprises sampling signal generation means for generating a sampling signal by shaping the waveform of the clock signal and dividing the clock signal by a predetermined division value; sampling rate selecting means for dividing the sampling signal by one of two different division values on the basis of the sampling rate selection signal output from the outside to generate a sampling signal at a sampling rate of a multiple of one of two different numbers ; and data input/output means for inputting and outputting data at a baud rate according to the sampling signal generated from the selection means.

The second invention of this invention relates to a microcomputer provided with a UART for setting a baud rate by dividing a clock signal output from the outside. The microcomputer comprises a CPU for processing data; memory means for storing data; a UART for controlling data input and output; a first register in which a division value specified for the sampling signals generation means by the CPU is written; a second register in which the division value specified for the sampling rate selection means by the CPU is written; and connecting means for connecting the above sections to each other. The UART comprises a) sampling signal generation means for generating a sampling signal by shaping the waveform of the clock signal and dividing the clock signal by the product of a predetermined division value and a division value specified by the CPU, b) sampling rate generation means for switching sampling rates by dividing the sampling signal by one of at least two different division values on the basis of the designation from the CPU to generate a sampling signal at a sampling rate of a multiple of one of at least two different numbers, and d) data input/output means for data input and output according to the sampling signal generated from the selection means;

A third invention of this invention relates to an IC card comprising a CPU for processing data, a ROM for storing a processing program for the CPU, a RAM for temporarily storing data, a EEPROM for storing data about processing results and the like, sampling rate switching means for dividing the clock signal output from the outside by one of at least two different division values according to the designation from the CPU, a UART for generating a sampling signal by shaping the waveform of the clock signal generated from the sampling signal switching means and dividing the clock signal by a division value based on the designation from the CPU and inputting and outputting data according to the sampling signal generated, and connection means for connecting the above sections to each other. The UART controls data input and output at a sampling rate of a multiple of one of at least two different numbers.

A fourth invention of this invention relates to a reader/writer connected to a central information processing system through a communication line and connected to an external medium so as to read and write data. The reader/writer comprises a CPU for processing data, memory means for storing data, communication control means for controlling data input and output to and from the central information processing system, sampling rate switching means for dividing the clock signal sent from the central information processing system through the communication control means by one of at least two different division values in accordance with the designation from the central information processing system through the CPU, a UART for generating a sampling signal by shaping the clock signal generated from the sampling rate switching means and dividing the clock signal by a division value based on the designation from the central information processing system through the CPU and inputting and outputting data to and from the external medium in accordance with the sampling signal generated, and connection means for connecting the sections to each other. The UART controls data input and output at a sampling rate of a multiple of one of at least two different numbers.

A fifth invention of the present invention relates to an IC card system comprising at least one system section for processing data and at least one IC card connected as an external medium to the system section. At least one of the system section and the IC card each having a CPU comprises sampling rate switching means for dividing the clock signal by one of at least two different division values in accordance with the designation from the CPU, and a UART for generating a sampling signal by shaping the wave form of the clock signal generated from the sampling signal switching means and dividing the clock signal by a division value based on the designation from the CPU and inputting and outputting data to and from another device in accordance with the sampling signal generated. The UART controls data input and output at a sampling rate of a multiple of one of at least two difference numbers.

In the UART in accordance with the first invention, a baud rate switching terminal is provided for further dividing the sampling signal, which is generated from the sampling signal generation means, by one of different division values in accordance with the sampling rate selection signal output from the outside, whereby the sampling rate of the sampling signal can be switched between multiples of two different numbers.

In the microcomputer in accordance with the second invention, the division value of the sampling rate selection means which can set the division value of the sampling signal generation means of the UART and at least two different division values is specified by writing in the first and second registers from the CPU, whereby the sampling signal at a sampling rate of a multiple of one of at least two different numbers can be generated.

In the IC card in accordance with the third invention, the sampling rate switching means divides the clock signal output from the outside by one of at least two different division values according to the designation from the CPU and sends the divided clock signal to the UART, and the UART can thus control data input and output at a sampling rate of a multiple of one of at least two different numbers.

In the reader/writer in accordance with the fourth invention, the division value of the sampling rate switching means which is provided in the reader/writer and which can set at least two different division values is controlled by the central information processing system through the communication control means, whereby the UART can control data input and output at a sampling rate of a multiple of one of at least two different numbers.

In the IC card system in accordance with the fifth invention, at least one of the IC card and the system section is provided with sampling rate switching means which can set at least two division values, and UART which can control data input and output at a sampling rate of a multiple of one of at least two different values on the base of the clock signal divided by the switching means, whereby the system section can be provided with compatibility with IC cards having different clock signal frequencies and different division values in the UART.

BRIEF DESCRIPTION OF THE DRAWINGS

Fig. 1 is a functional block diagram showing an embodiment of a UART according to the first invention of the present invention;

Fig. 2 is a drawing showing the logical selection circuit shown in Fig. 1;

Fig. 3 is a timing chart of the selection circuit shown in Fig. 2;

Fig. 4 is a functional block diagram showing an embodiment of the microcomputer according to the second invention of the present invention;

Fig. 5 is a drawing showing the logical selection circuit shown in Fig. 4;

Fig. 6 is a timing chart of the selection circuit shown in Fig. 5;

Fig. 7 is a functional block diagram showing another embodiment of the microcomputer according to the second invention of the present invention;

Fig. 8 is a functional block diagram showing an embodiment of the IC card according to the third invention of the present invention;

Fig. 9 is a functional block diagram showing an embodiment of the reader/writer according to the fourth invention of the present invention;

Fig. 10 is a block diagram showing an embodiment of the IC card system according to the fifth invention of the present invention;

Fig. 11 is a flow chart of the operation of the IC card system shown in Fig. 10;

Fig. 12 is a block diagram showing another embodiment of the IC card system according to the fifth invention of the present invention;

Fig. 13 is a flow chart of the operation of the IC card system shown in Fig. 12;

Fig. 14 is a block diagram showing still another embodiment of the IC card system according to the fifth invention of the present invention;

Fig. 15 is a flow chart of the operation of the IC card system shown in Fig. 14;

Fig. 16 is a functional block diagram showing another embodiment of the IC card according to the third invention of the present invention;

Fig. 17 is a functional block diagram showing another embodiment of the reader/writer according to the fourth invention of the present invention;

Fig. 18 is a block diagram showing a further embodiment of the IC card system according to the fifth invention of the present invention;

Fig. 19 is a flow chart of the operation of the IC card system shown in Fig. 18;

Fig. 20 is a block diagram showing a still further embodiment of the IC card system according to the fifth invention of the present invention;

Fig. 21 is a flow chart of the operation of the IC card system shown in Fig. 20;

Fig. 22 is a block diagram showing a further embodiment of the IC card system according to the fifth invention of the present invention;

Fig. 23 is a flow chart of the operation of the IC card system shown i Fig. 22;

Fig. 24 is a functional block diagram showing a conventional UART;

Fig. 25 is a functional block diagram showing a conventional microcomputer;

Fig. 26 is a block diagram showing a conventional IC card system; and

Fig. 27 is a flow chart of the operation of the IC card system shown in Fig. 26.

## DESCRIPTION OF THE PREFERRED EMBODIMENTS

### Embodiment 1

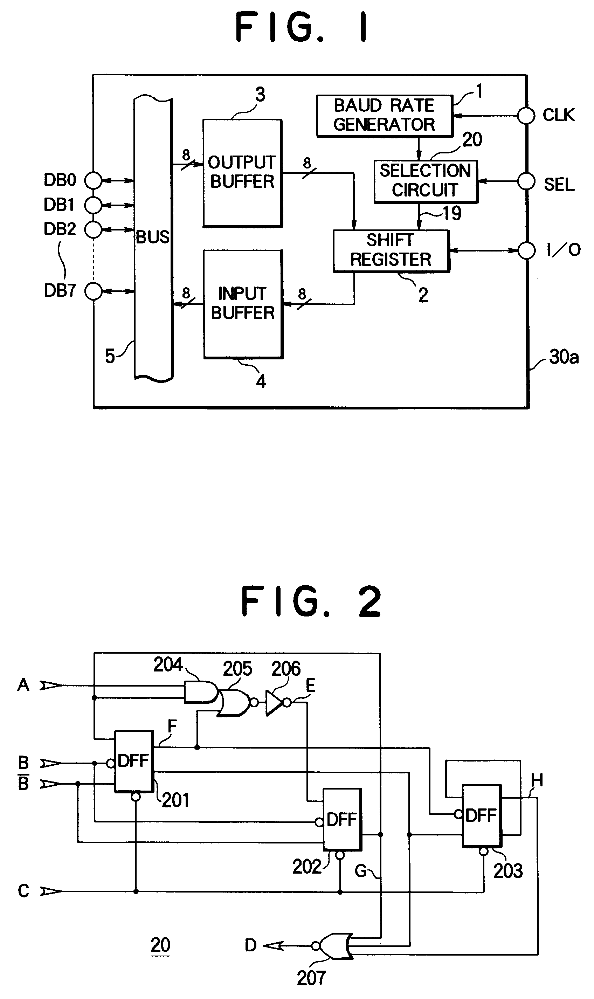

An embodiment of the present invention is described below. Portions which are the same as or equivalent to those of a conventional device are denoted by the same reference numerals and are not described below. Fig. 1 is a functional block diagram showing an embodiment of a UART according to the first invention of the present invention. In a UART 30a, a sampling rate selection circuit 20 serving as a divider which can switch two different division values is interposed between a baud rate generator 1 and a shift register 2, and a sampling rate selection terminal SEL is provided for permitting the division value of the selection circuit 20 to be switched by the signal output from the outside. The sampling rate selection signal output from the selection terminal SEL is input to the selection circuit 20. The baud rate generator 1 shapes the waveform of the clock signal output from the clock terminal CLK and divides the clock signal by a fixed division value to generate a pre-sampling signal. The selection circuit 20 further divides the sampling signal by the division value of the two different division values, which is designated by the selection signal SEL, to generate a sampling signal 19. The sampling signal 19 is supplied to the shift register 2 which controls the timing of the data transmission and receiving to and from the outside with the timing of the sampling signal 19 supplied thereto to determine a baud rate.

The baud rate generator 1 constitutes sampling signal generation means, and the sampling rate selection terminal SEL and the selection circuit 20 constitute sampling rate selection means. The shift register 2, the output buffer 3 and the input buffer 4 form data input/output means.

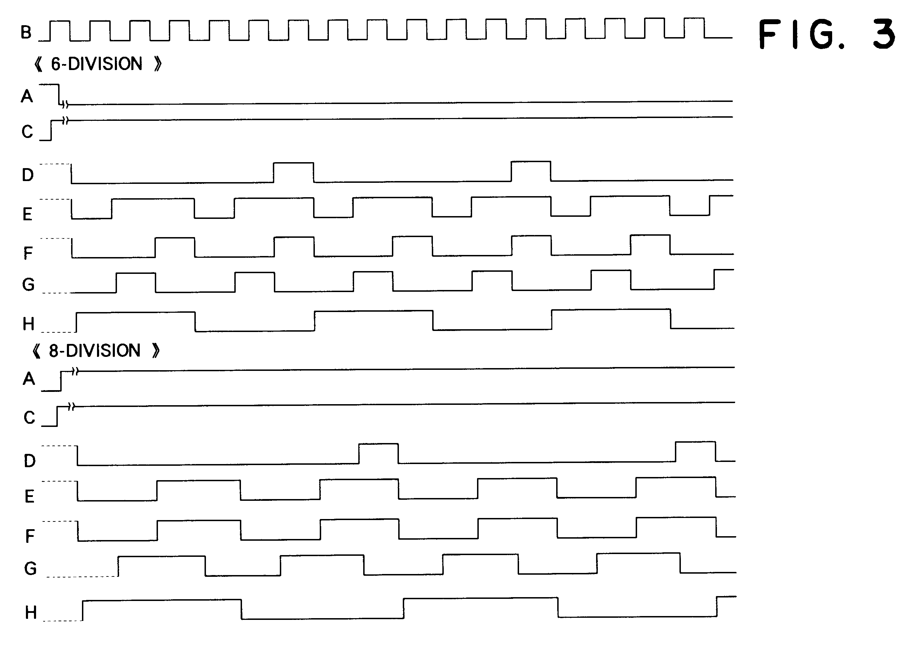

A description will now be made of the operation of the selection circuit when the sampling signal is switched between a multiple of 8 and a multiple of 6 with reference to Figs. 2 and 3. Fig. 2 shows as an example of the selection circuit 20 shown in Fig. 1 a logic circuit which can switch 6-division and 8-division. In Fig. 2, reference numerals 201 to 203 denote D-type flip flops, reference numeral 203 denotes an AND gate, reference numerals 205 and 207 denote NOR gates, and reference numeral 206 denotes an inverter. Character A indicates the sampling rate selection signal SEL; character B, the sampling signal output from the baud rate generator 1; character $\overline{B}$, the reverse signal thereof; character C, a reset signal; and character D, the sampling signal 19 to be supplied to the shift register 2. Fig. 3 shows the timing charts of signals of the circuit shown in Fig. 2 during 6-division and 8-division.

A description will be made of the operations of the selection circuit 20 during 6-division and 8-division with reference to Fig. 3. The operations during 6-division and 8-division are commonly based on the assumption that after reset is released, the reset signal C is changed from "L" level to "H" level, and the clock signal B is input with a predetermined period.

On the above assumption, a sampling signal of 6-division can be obtained by fixing the sampling rate selection signal A at the "L" level. The logic section which generates the signal E is made variable by the signals G and F when the signal A is fixed at the "L" level, and the signal E is at the "L" level only when both signals G and F are at the "L" level. The signal E is thus at the "L" level in the first and fourth cycles of the clock signal, and it is at the "H" level in the other clock cycles.

When the clock signal B is changed from the "H" level to the "L" level, if the signal G is at the "H" level, the signal F is at the "H" level. If the signal G is at the "L" level, the signal F is at the "H" level in the third and sixth cycles of the clock signal because it is set to the "L" level. Although the signal G is fixed at the "H" level during reset, it is set in the same manner as the signal F when the clock signal B is changed from the "H" level to the "L" level according to the state of the signal E after reset is released. The signal G is thus at the "H" level in the second and fifth cycles of the clock signal. Since the signal H is inverted when the signal F is changed from the "H" level to the "L" level (the D-type flip flop 203 is a 1/2 division circuit for the signal F), the signal H is at the "H" level in the first and third cycles, as shown in the drawing.

The output signal D which is the sampling signal 19 is output from the NOR circuit 207 to which the signal G, the reverse signal $\overline{F}$ and the signal H are input, and the signal D is at the "H" only when all the three signals are at the "L" level. The sampling signal 19 is at the "H" level only in the sixth cycle of the clock signal, i.e., at a rate of once six clock signals.

In 8-division, since the sampling rate selection signal A in the logic section which generates the signal E is fixed at the "H" level, the signal E is the same as the signal F. Although the generation conditions of each of the signals G and H are the same as those in 6-division, the signal F is changed according to the state of the signal G. As a result, the signals E and F at the "H" level in the third and fourth cycles of the clock signal, and the signal G at the "H" level in the fifth and six cycles are obtained. The signal F is input as the signal E to the D-type flip flop 202 which generates the signal G, and the signal G is at the "H" level in the second and third cycles and the sixth and seventh cycles. Since the signal H is obtained by 1/2 division of the signal F by the flip flop 203, the signal H is at the "H" level in the first to fourth cycles.

Since the output of the signal D serving as the sampling signal 19 is thus at the "H" level with the timing with which all the signal G, the reverse signal $\overline{F}$ and the signal H are at the "L" level, the timing signal obtained is at the "H" level only in the eighth cycle of the clock signal.

The each of the sampling signals 19 (signal D) obtained by the above operations is supplied to the shift register 2. The shift register 2 is operated with the timing of the sampling signal supplied so as to transmit and receive data to and from the outside.

Embodiment 2

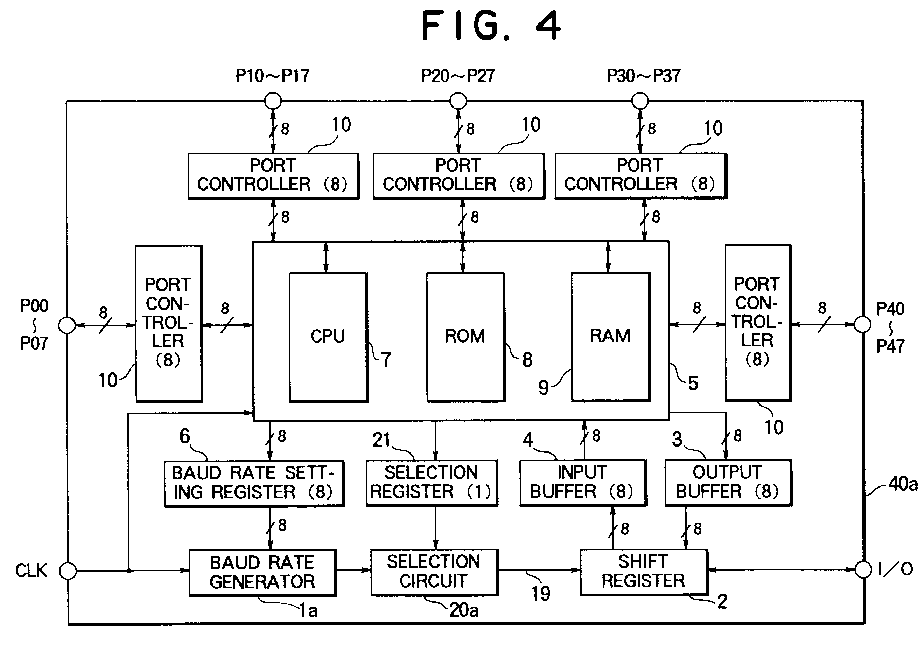

Fig. 4 is a functional block diagram showing an embodiment of a microcomputer according to the second invention of the present invention. A microcomputer 40a comprises a 1-bit sampling rate selection register 21, and a sampling rate selection circuit 20a. The selection register 21 is used for storing a control signal for switching sampling rates of two different multiples. The sampling rates of two different multiples are switched by the selection register 21, and the baud rate at a sampling rate of the same multiple is changed by a value set in a baud rate setting register 6. During serial data transmission and receiving to and from the outside and processing by the microcomputer, when the sampling rate must be changed to the other multiple for changing the baud rate, the CPU 7 changes the value of the selection register 21 and switches the control signal supplied to the sampling rate election circuit 20a. This causes the sampling signal supplied from the baud rate generator 1a to be controlled by the selection circuit 20a and the sampling rate of the sampling signal 19 supplied to the shift register 2 to be switched. For example, when multiples of 16 and 12 can be switched by the selection circuit 20a, and when the sampling rate is set to a multiple of 16 by setting the value of the selection register 21 to "0", and is set to a multiple 12 by setting the value to "1", "0" is set in the selection register 21, and "32" is set in the baud rate setting register 6 in order to perform data transmission and receiving at the baud rate obtained by 512 division of the clock signal CLK. Thus the division values of the baud rate generator 1a and of the selection circuit 20a are 32 and 16, respectively, thereby realizing division into 512 which is the product of these division values. When data is transmitted and received at the baud rate obtained by 372 division of the clock signal CLK, "1" is set in the selection register 21, and the "31" is set in the baud rate setting register 6. The division values of the baud rate generator 1a and of the selection circuit 20a are thus "31" and "12", respectively, thereby realizing the division into 372 which is the product of these division values. All the above values are set by the CPU.

Memory means comprises a ROM 8 and a RAM 9. The sampling signal generation means of the UART comprises the baud rate generator 1a, the sampling rate selection means comprises the selection circuit 20a, and the data input/output means comprises the shift register 2, the output buffer 3 and the input buffer 4. The first and second registers comprises the baud rate setting register 6 and the selection register 21, respectively.

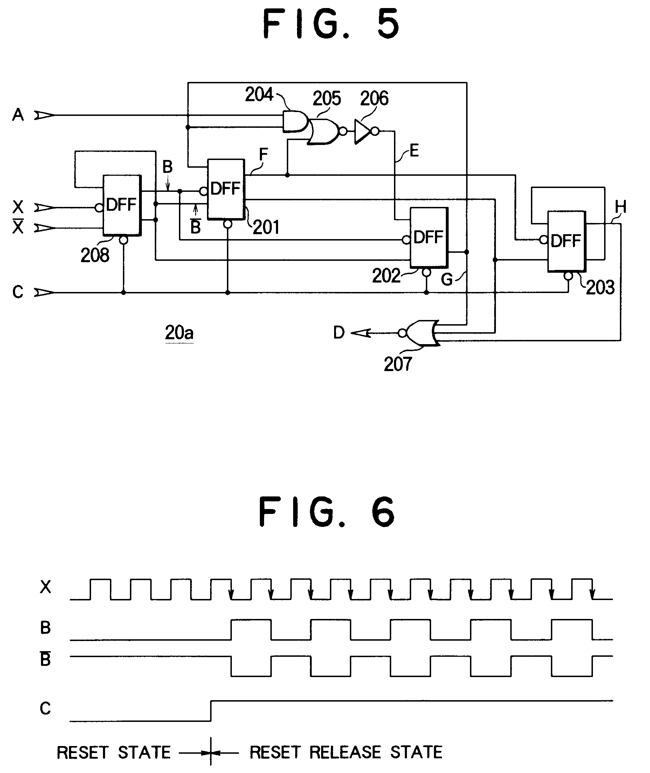

Fig. 5 is a drawing showing as an example of the selection circuit 20a shown in Fig. 4 a logic circuit which can switch 12 division and 16 division. This circuit is the same as that shown in Fig. 2, except that a D-flip flop 208 for 2 division is provided before the circuit for switching 6-division and 8-division. In addition, the clock signal is indicated by character X. Fig. 6 shows the timing chart for the operation of 2-division of the signal B relative to the clock signal X. This operation is briefly described below. When the reset signal C is put into the reset release state, the signal B is reset to the "L" level, and the reverse signal $\overline{B}$ is reset to the "H" level. After reset is released, the value of the reverse signal $\overline{B}$ is set to the value of the signal B each time the clock signal X is changed from the "H" level to the "L" level. Since the signals B and $\overline{B}$ are reverse signals to each other, the value of the signal B is reversed to generate a signal subjected to 2-division each time the clock signal X is changed from the "H" level to the "L" level. Since the subsequent operation of the circuit is the same as that of the circuit shown in Fig. 2, it is not described below.

Although, in the above embodiment, the selection register 21 for selecting one of the two sampling rates comprises a 1-bit register for switching the two states, the selection register may comprises a register having 2 or more bits.

## Embodiment 3

Although Fig. 4 shows the microcomputer for selecting sampling rates of multiples of two numbers, a microcomputer for obtaining a sampling rate of a multiple of any desired number is described below.

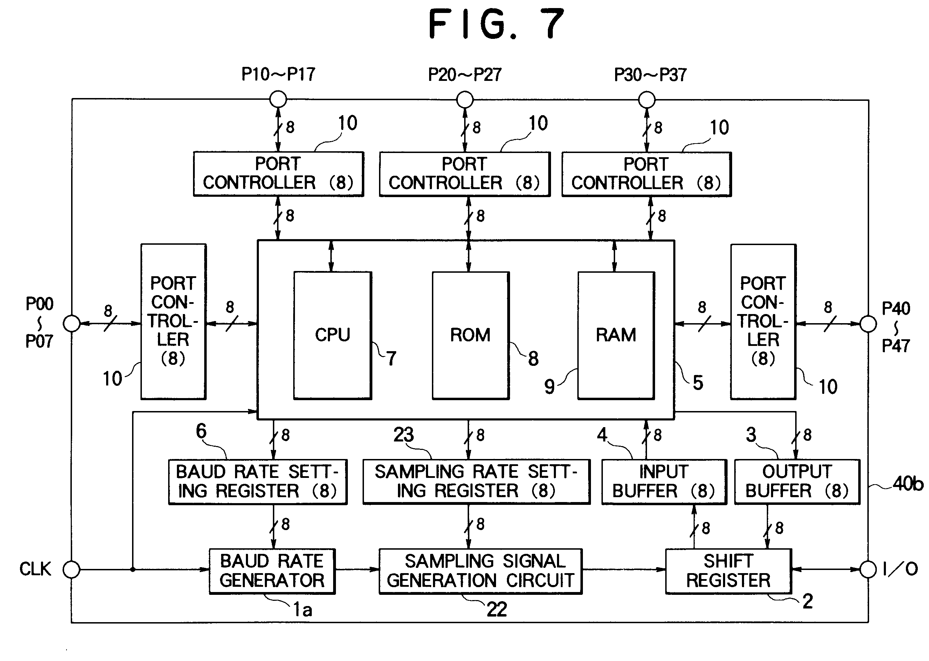

Fig. 7 is a functional block diagram showing another embodiment of the microcomputer according to the second invention of the present invention. In this embodiment, a microcomputer 40b comprises a 8-bit sampling rate setting register 23 and a sampling signal generation circuit 22 which can generate a sampling signal of a multiple of any desired number. The sampling rate setting register 23 comprises a 8-bit register which is generally used. The sampling signal generation circuit 22 may comprise a division circuit for dividing the frequency f of a signal by n. Such a division circuit for dividing the frequency f of a signal by n is disclosed in, for example, "Practical Electronic Circuit Handbook" Vol. 8, p 100 - 107, CQ Shuppan K. K. A sampling rate of a multiple is set by the sampling rate setting register 23, a baud rate at the set multiple is changed by a baud rate setting register 6. For example, when data is transmitted and received at a sampling rate of a multiple of 8, "8" is set in the sampling rate setting register 23 and is supplied to the generation circuit 22. The baud rate generator 1a divides the clock signal CLK by the value set in the baud rate setting register 6 to generate a sampling signal, and the generation circuit 22 divides the generated sampling signal by "8" supplied from the setting register 23 to generate a sampling signal with a samping rate of a multiple of 8 which is then supplied to the shift register 2. When the baud rate must be set to a multiple of 3 which is the division value of the clock signal CLK, the baud rate of a multiple of 3 can be realized by setting "3" in the sampling rate setting register 23. As described above, the baud rate of a multiple of any desired number can be realized by setting a desired multiple in the sampling rate register 23.

In this embodiment, the sampling rate selection means comprises the sampling signal generation circuit 22, and the sampling rate setting register 23 comprises the second register.

## Embodiment 4

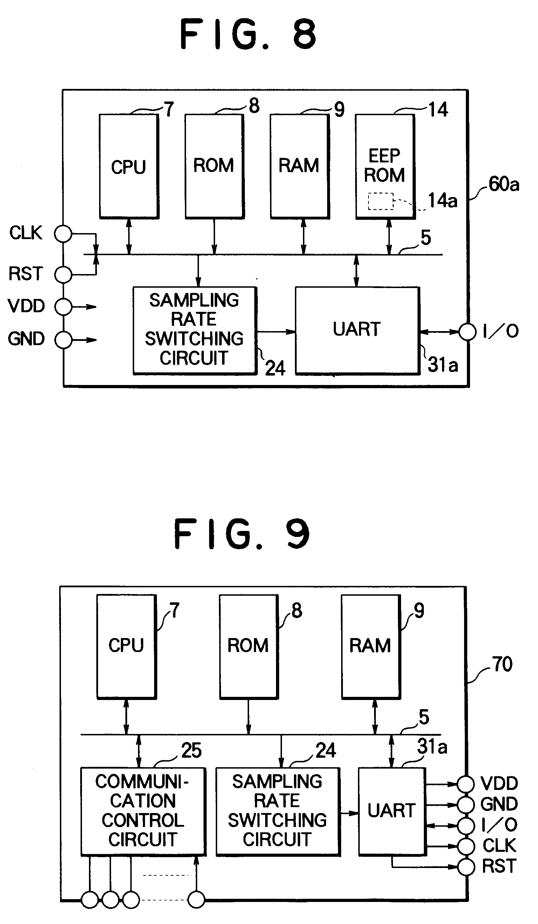

Fig. 8 is a functional block diagram showing an embodiment of the IC card according to the third invention of the present invention. In Fig. 8, reference numeral 60a denotes an IC card; reference numeral 7, a CPU; reference numeral 8, a ROM; reference numeral 9, a RAM; reference numeral 14, a EEPROM; reference numeral 31a, a UART; reference numeral 24, a sampling rate switching circuit; and reference numeral 5, a bus. The sampling rate switching circuit 24 comprises, for example, the same circuit as the selection register 21 or the selection circuit 20a of the microcomputer shown in Fig. 4. The CPU 7 processes data while serially transmitting and receiving data to and from the outside through the input/output terminal I/O in accordance with the processing program stored in the ROM 8. The CPU 7 also stores data required to be temporarily stored in the RAM 9 and data required to be constantly stored, such as information about the card attribute, the processing results and the like, in the EEPROM 14. The IC card also contains the sampling rate switching circuit 24 which switches sampling rates of two different multiples by control of the CPU 7. When the sampling rate must be changed as the baud rate changes during processing of data transmitted and received to and from the outside through the input/output terminal I/O, the CPU 7 outputs a control signal to the sampling rate switching circuit 24. The sampling rate switching circuit 24 latches the control signal and divides the clock signal by one of two different division values in order to obtain a sampling signal of a required multiple. The sampling signal obtained is supplied to the UART 31a, and data transmission and receiving can thus be realized at a sampling rate switched.

Although, in the above embodiment, the switching circuit 24 latches the control signal for switching the sampling rate, since the IC card 60a has the nonvolatile EEPROM 14, information about the sampling rate may be read from the address (shown by a broken line 14a in Fig. 8) in the EEPROM 14, which is previously determined for storing the control signal for switching the sampling rate, during data transmission and receiving to and the outside, so that the sampling signal is generated on the basis of the information read. In this case, the CPU 7 rewrites the value at the address in the EEPROM 14 when the sampling rate is switched. This makes the selection register 21 (refer to Fig. 4) in the sampling rate switching circuit 24 unnecessary, thereby decreasing the hardware load of the switching circuit.

Embodiment 5

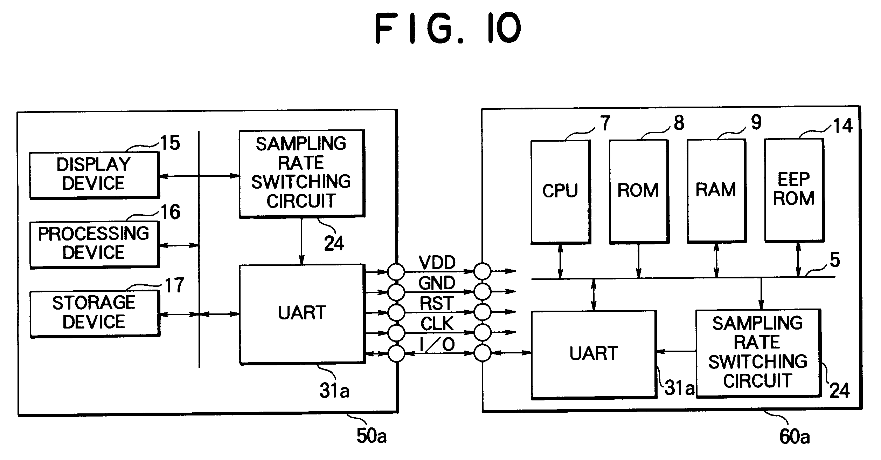

Fig. 9 is a functional block diagram showing an embodiment of a reader/writer according to the fourth invention of the present invention. A reader/writer 70 is connected to a central information processing system comprising a computer or the like by a communication line or the like (not shown) and controls data transmission and receiving to and from an IC card serving as an external medium. Data is transmitted and received to and from the system through a communication control circuit 25. The designation generated from the system is processed by the CPU 7, and data transmission and receiving to and from an IC card is controlled through the UART 31a on the basis of the designation. The reader/writer 70 configured as described above is provided with a sampling rate switching circuit 24 for switching sampling rates of tow different multiples. The switching circuit 24 comprises the same circuit as that of the IC card 60a shown in Fig. 8. The instructions from the system to switch the sampling rates are read by the CPU 7 through the communication control circuit 25, and the CPU 7 outputs a control signal to the sampling rate switching circuit 24. When the switching circuit 24 latches the control signal, it divides the clock signal CLK by one of two different division values and supplies the divided signal to the UART 31a. The clock signal is also sent from the system. In the reader/writer 70, the sampling rates are switched by control of the system through the communication control circuit 25.

Embodiment 6

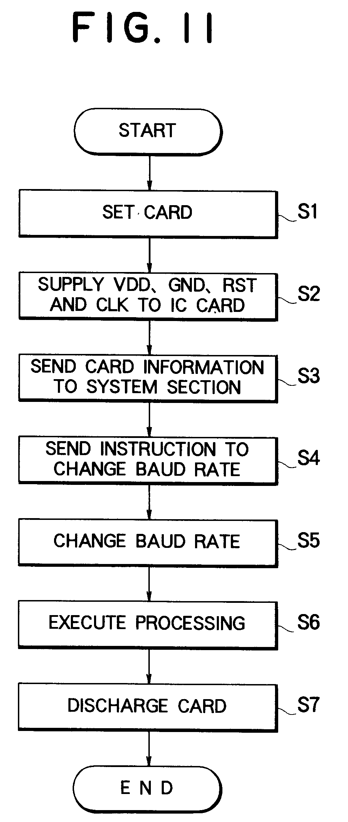

Fig. 10 is a block diagram showing an embodiment of an IC card system according to the fifth invention of the present invention. Fig. 11 is a flow chart showing the operation of the system shown i Fig. 10. The IC card system has a baud rate at a sampling rate of each of two different multiples, and each of the IC card 60a and the system section 50a has the sampling rate switching circuit 24 so that the sampling rates are switched for data transmission and receiving according to demand.

The operation of the IC card system is described below with reference to Fig. 11. The IC card 60a is first set in the system section 50a (Step S1). A power supply voltage VDD, a ground voltage GND, a reset signal RST and a clock signal CLK are supplied to the IC card 60a (Step S2). Card information including information about the card attribute and the like is sent to the system section 50a from the IC card 60a (Step S3). Instructions to change the baud rates are sent from one of the system section 50a and the IC card 60a to the other side on the basis of the information about the card attribute according to demand (Step S4). In both sides, the baud rate is changed to a new baud rate, and execution of processing is started (Steps S5 and S6). There are two types of baud rate setting methods including a type in which a frequency of 3.5712 MHz is divided by 372 to realize a baud rate of 9600 bps, and a type in which a frequency of 4.9152 MHz is divided by 512 to realize a baud rate of 9600 bps. For example, when an initial baud rate of 9600 bps is set by dividing a frequency of 3.5712 MHz by 372, baud information is first sent to the system section 50a at the initial set baud rate. At the same time, the card information to be sent to the system section 50a includes the information that data can be transmitted and received at a baud rate of 9600 bps obtained by dividing a frequency of 4.9152 MHz by 512. The system section 50a sends the instructions to change the baud rate to the IC card 60a on the basis of the card information, whereby the baud rate is changed in both the IC cards 60a and the system section 50a, and execution of processing is started.

In this embodiment, after the card information is sent to the system section 50a, the baud rate is changed, and processing is executed. However, after predetermined processing is executed at the initial set baud rate, the baud rate may be changed if required.

Embodiment 7

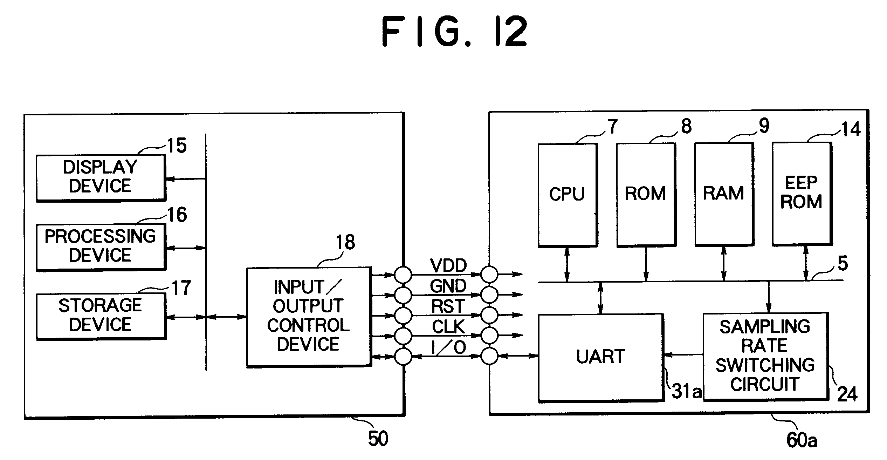

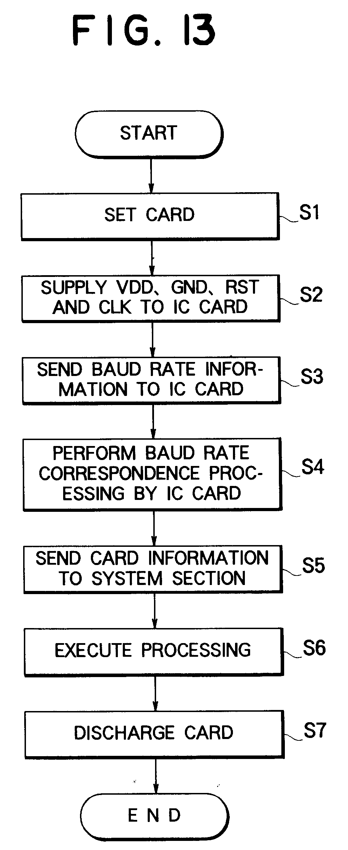

Fig. 12 is a block diagram showing still another embodiment of an IC card system according to the fifth invention of the present invention. Fig. 13 is a flow chart showing the operation of the system shown in Fig. 12. In this embodiment, the system section side has two system sections 50 which respectively transmit and receive data at baud rates of different multiples, and an IC card 60a correspond to the two system sections 50. The IC card 60a contains a sampling rate switching circuit 24 so that the sampling rates are switched for data transmission and receiving corresponding to the system sections. The operation of the IC card system is described below with reference to Fig. 13. The IC card 60a is first set on the side of the system sections 50 (Step S1). Signals VDD, GND, RST and CLK are then supplied to the IC card 60a (Step S2), and baud information is sent to the IC card 60a from the system sections 50 (Step S3). The the side of IC card 60a receives the baud rate information, and performs baud rate correspondence processing for changing the baud rates in accordance with the baud rate information if required (Step S4). The card information is then sent to the side of the system sections 50 (Step S5), and execution of processing is started at the baud rate required for the side of the system sections 50 (Step S6). After processing, the card is discharged, and the processing is finished (Step S7).

Embodiment 8

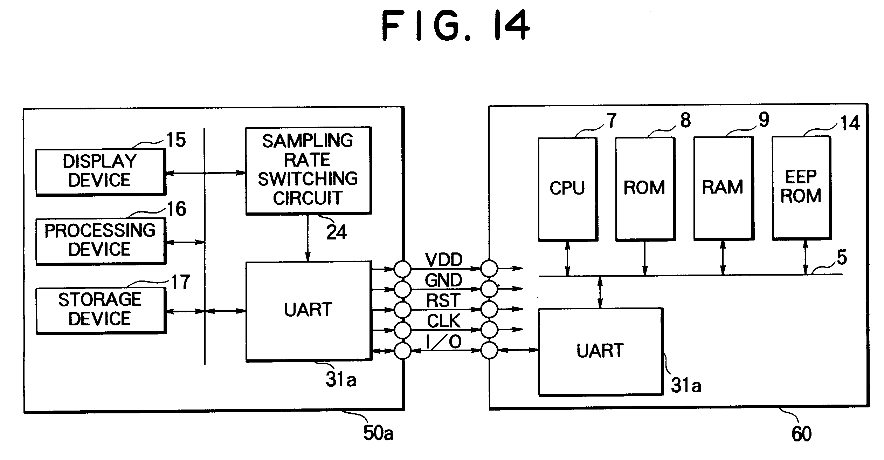

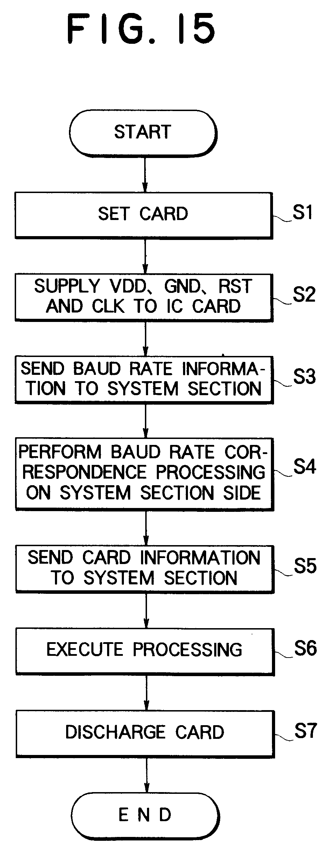

Fig. 14 is a block diagram showing a further embodiment of an IC card system according to the fifth invention of the present invention. Fig. 15 is a flow chart showing the operation of the system shown in Fig. 14. In this embodiment, the IC card side has two IC cards 60 which respectively transmits and receives data at baud rates of different multiples, and a system section 50a corresponds to the two IC cards 60. The side of the system section 50a contains a sampling rate switching circuit 24 so that the sampling rates are switched for data transmission and receiving in accordance with the IC cards 60. The operation of the IC card system is described below with reference too Fig. 15. The IC cards 60 are set on the side of the card system 50a (Step S1). Signals VDD, GND, RST and CLK are then supplied to the side of the IC cards 60 set (Step S2), and baud rate information is sent to the system section 50a from the side of the IC cards 60 (Step S3). The side of the system section 50a receives the baud rate information and performs baud rate correspondence processing for changing the baud rates in accordance with the information if required (Step S4). The other card information is then sent to the system section 50a (Step S5), and execution of processing at a baud rate required for the side of the IC cards is then started (Step S6). After processing, the cards are discharged, and the processing is finished (Step S7).

Embodiment 9

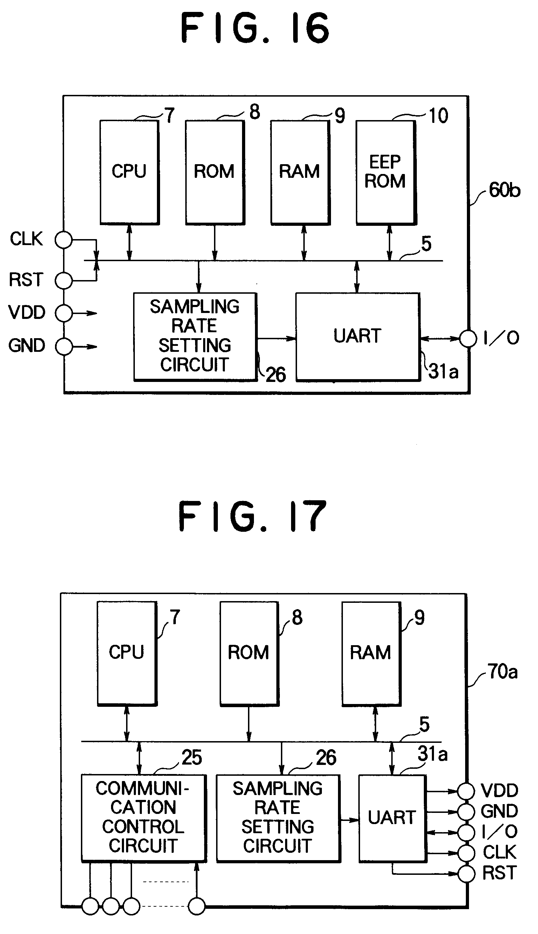

Fig. 16 is a functional block diagram showing another embodiment of an IC card according to the third invention of the present invention. In the IC card, the CPU 7 processes data according to the processing program stored in the ROM 8 while serially transmitting and receiving data to and from the outside through the input/output terminal I/O. The CPU 7 also stores data required to be temporarily stored in the RAM 9 and data required to be constantly stored, such as the information about the card attribute, the processing results and the like, in the EEPROM 14. This embodiment comprises a sampling rate setting circuit 26 which can set a sampling rate of a multiple of any desired number by the control of the CPU 7. The sampling rate setting circuit 26 comprises, for example, the same circuit as the sampling rate setting register 23 or the sampling signal generation circuit 22 of the microcomputer 40b shown in Fig. 7. When the sampling rate must be set to any desired value during execution of processing, the CPU 7 sets the desired value in the sampling rate setting circuit 26. The sampling rate setting circuit 26 divides the clock signal so as to realize a sampling rate of the set value and supplies the sampling rate to the UART 31a. This realizes data transmission and receiving at a baud rate required.

Embodiment 10

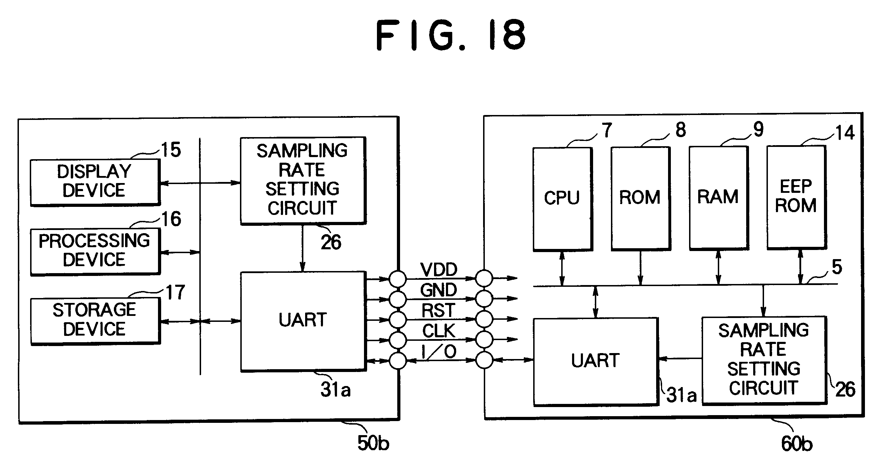

Fig. 17 is a functional block diagram showing another embodiment of a reader/writer according to the fourth invention of the present invention. A reader/writer 70a is connected to a central information processing system comprising a computer or the like through a communication line or the like (not shown) so as to control data transmission and receiving to and from an IC card. Data is transmitted and received to and from the central information processing system through a communication control circuit 25, and designation from the system is processed by the CPU 7. The CPU 7 controls data transmission and receiving to and from the IC card through the UART 31a in accordance with the designation. In this embodiment, the reader/writer 70a configured as described above comprises a sampling rate setting circuit 26 which can set a sampling rate of any desired multiple. The setting circuit 26 is the same as that shown in Fig. 16. The instructions to set a sampling rate, which are generated from the system, are read by the CPU 7 through the communication control circuit 25. The CPU 7 gives instructions to the sampling rate setting circuit 26, and the sampling rate setting circuit 26 divides the clock signal CLK by specified the division value to obtain a sampling signal with a sampling rate of the desired value and supplies the sampling signal to the UART 31a. In the reader/writer 70a, any sampling rate is set by the control of the system through the communication control circuit 25.

Embodiment 11

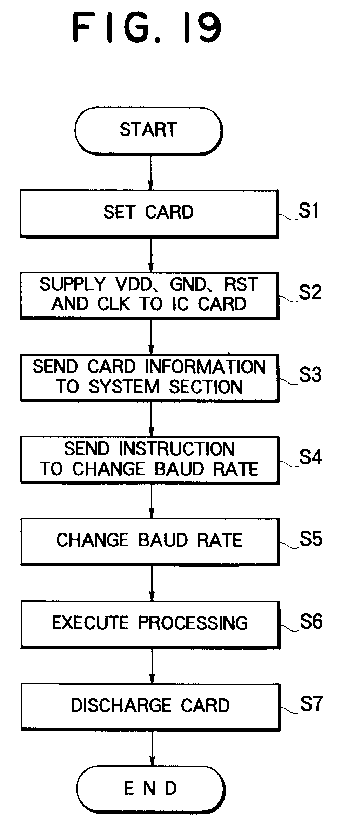

Fig. 18 is a block diagram showing a still further embodiment of an IC card system according to the fifth invention of the present invention. Fig. 19 is a flow chart showing the operation of the system shown in Fig. 18. In the IC card system, a plurality of baud rates of multiples of different numbers are present, and both the IC card and the system section contain a sampling rate setting circuit 26 so that a sampling rate is set for data transmission and receiving on both sides according to demand. The operation of the IC card system is described below with reference to Fig. 19. An IC card 60b is first set on the side of a system section 50b (Step S1). Signals VDD, GND, RST and CLK are then supplied to the IC card 60b (Step S2), and card information is sent to the system section 50b from the IC card 60b (Step S3). Instructions to set a baud rate is sent from one of the system section 50b and the IC card 60b to the other side according to demand (Step S4). On both sides, the baud rate is changed to a new value, and execution of processing is started (Steps S5 and S6). For example, in a system having at least three sampling rates, an initial set baud rate is set, the card information is constantly sent to the system section 50b at the initial set baud rate. The set sampling rate is then changed by the requirement of the system section side or the IC card side, and data is transmitted and received. After the processing is completed, the card is discharged, and the processing finished (Step S7).

Embodiment 12

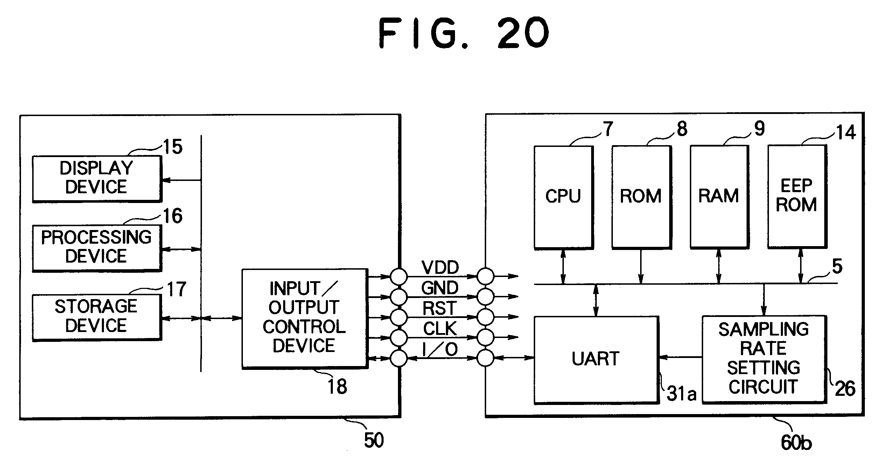

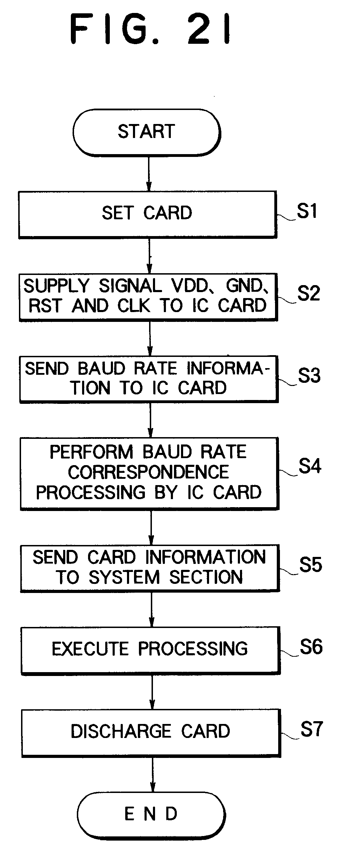

Fig. 20 is a block diagram showing a further embodiment of an IC card system according to the fifth invention of the present invention. Fig. 21 is a flow chart showing the operation of the system shown in Fig. 20. In this embodiment, a system comprises at lest three systems on the system section side, and the systems respectively transmit and receive data at baud rates of different multiples. Alternatively, a system comprises only a few systems on the system section side, but it is required to transmit and receive data at sampling rates of multiples of many numbers. This IC card system applies to a case where an IC card must correspond to many sampling rates. An IC card 60b contains a sampling rate setting circuit 26 so that a sampling rate is set for data transmission and receiving in accordance with the system section 50. The operation of the system is described below with reference to Fig. 21. The IC card 60b is first set on the side of the system sections 50 (Step S1). Signals VDD, GND, SRT and CLK are then supplied to the IC card 60b (Step S2). Baud rate information is then sent from the system section 50b to the IC card 60b (Step S3). When the baud rate must be changed, the sampling rate is changed according to the information, and baud rate correspondence processing is performed so as to correspond to the baud rate required (Step S4). Card information is then sent to the system section 50 (Step S5), and execution of processing is started at a new set baud rate (Step S6). After the processing, the card is discharged, and the processing is finished (Step S7).

Embodiment 13

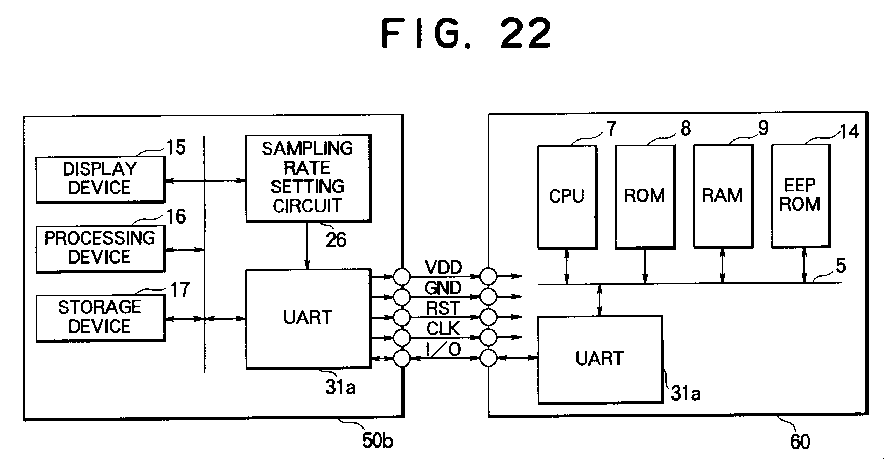

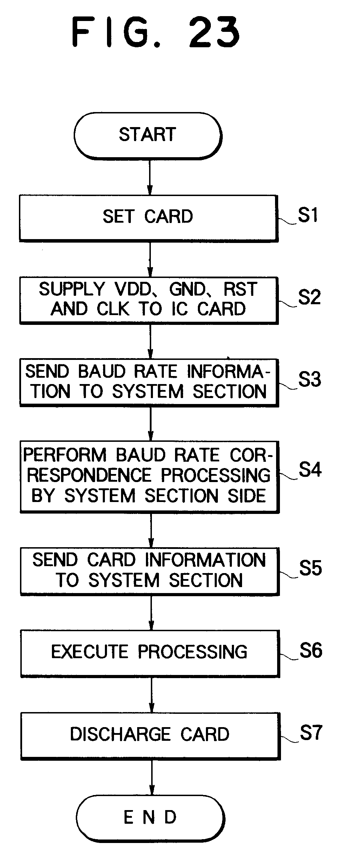

Fig. 22 is a block diagram showing a further embodiment of an IC card system according to the fifth invention of the present invention. Fig. 23 is a flow chart showing the operation of the system shown in Fig. 22. In this embodiment, at least three IC cards are present on the IC card side, and respectively transmit and receive data at baud rates of multiples of different numbers. A system section 50b contains a sampling rate setting circuit 26 in order to cause a single system to correspond to a plurality of IC cards which respectively transmit and receive data at baud rates of multiples of different numbers. This permits data transmission and receiving at a sampling rate which is set in accordance with the IC cards 60. The operation of the IC card system is described below with reference to Fig. 23. The IC cards 60 are set in the system section 50b (Step S1). Signals VDD, GND, ART and CLK are then supplied to the IC cards 60 (Step S2). Baud rate information is then sent from the IC cards 60 to the system section 50b (Step S3). The side of the system section 50b receives the baud rate information, changes the sampling rate according to the information when the baud rate must be changed, and performs baud rate corresponding processing to correspond to the baud rate required by the IC cards 60 (Step S4). The other card information is then sent to the side of the system section 50b (Step S5). The execution of processing is started at a newly set baud rate (Step S6). After the processing is completed, the cards are discharged, and the processing is finished (Step S7).

As described above, the UART according to the first invention comprises a selection terminal exclusively used for switching sampling rates so that two sampling rates are switched by input through the terminal. The UART thus permits baud rates to be easily switched by control of the outside and a single UART to correspond to two baud rates. Unlike a conventional UART, the clock signal CLK to be input needs no to be processed so as to correspond to a required baud rate. The UART thus has good general-purpose properties.

The microcomputer according to the second invention comprises the sampling rate selection register or the sampling rate setting register, which is provided therein, so that sampling rates are switched by a value set in the register. The microcomputer can thus correspond to data transmission and receiving which require at least two sampling rates, and permits the sampling rates to be switched by freely changing the value of the setting register during data transmission and receiving between the CPU and the outside as occasion demands. There is thus the effect of widening the application of data transmission performed by the microcomputer.

The IC card having 5 terminals for serial data transmission and receiving according to the third invention contains the sampling rate switching circuit or the sampling rate setting circuit. The IC card can thus correspond to sampling rates of multiples of at least two different numbers. There is thus the effect of enabling a single IC card to comply with the European and Japanese IC card markets in each of which standardization is separately progressed, and which having different sampling rates.

The reader/writer according to the fourth invention contains the sampling rate switching circuit or the sampling rate setting circuit so that data transmission can be made at at least two sampling rates by a simple reader/writer connected to a system which transmits and receives data at sampling rates of multiples of at least two numbers. There is thus the effect of realizing a system which transmits and receives data at at least two sampling rates by connecting the reader/writer thereto and control it even if no sampling rate switching circuit is provided on the system side.

The IC card system according to the fifth invention comprises the IC card and the system section at least one of which contains the sampling rate switching circuit or the sampling rate setting circuit so that data can be transmitted at baud rates of multiples of at least two different numbers. There are thus the effect of providing systems having different specifications with compatibility therebetween and the effect of permitting data to be easily transmitted and received at an increased baud rate when data must be transmitted at a high speed and data to be usually transmitted at a standardized baud rate.

The present invention provides a microcomputer which realizes a baud rate at sampling rates of multiples of at least two different numbers.

The microcomputer contains a sampling rate selection register for storing a division value specified by a CPU, and a sampling rate selection circuit for dividing the sampling signal generated from a baud rate generator by a division value set in the sampling rate selection register so that the sampling rate of the sampling signal supplied to a shift register can be switched within the range of multiples of at least two different numbers.

**Claims**

1. A UART in which a baud rate is set by dividing a clock signal input from the outside, comprising:

   sampling signal generation means for shaping the waveform of said clock signal and dividing said clock signal by a predetermined division value to generate a sampling signal;

   sampling rate selection means for further dividing said sampling signal by one of two different division values in accordance with the sampling rate selection signal output from the outside to generate a sampling signal at sampling rate of a multiple of one of two different numbers; and

   data input/output means for inputting and outputting data at a baud rate according to the sampling signal generated from said selection means.

2. A microcomputer provided with UART for setting a baud rate by dividing a clock signal input from the outside thereto, comprising:

   a CPU for processing data;

   memory means for storing data;

   a UART for controlling data input and output comprising:

   a) sampling signal generation means for shaping the waveform of said clock signal and dividing said clock signal by a division value of the product of a predetermined division value and the division value specified by said CPU to generate a sampling signal;

   b) sampling rate selection means for switching sampling rates by dividing said sampling signal by one of at least two division values in accordance with the designation from said CPU to generate a sampling signal at sampling rate of a multiple of one of at least two different numbers; and

   c) data input/output means for inputting and outputting data in accordance with the sampling signal generated from said selection means;

   a first register in which a division value specified for said sampling signal generation means by said CPU is written;

   a second register in which a division value specified for said sampling rate selection means by said CPU is written; and

   connection means for connecting said sections to each other.

3. An IC card comprising:

   a CPU for processing data;

   a ROM for storing a processing program for said CPU;

   a RAM for temporarily storing data;

   a EEPROM for storing data such as processing results and the like;

   sampling rate switching means for dividing the clock signal input from the outside thereto by one of at least two division values in accordance with the designation from said CPU;

a UART for shaping the waveform of the clock signal generated from said sampling rate switching means, dividing said sampling signal by a division value based on the designation from said CPU to generate a sampling signal, and inputting and outputting data in accordance with the sampling signal generated; and

connection means for connecting the sections to each other;

wherein said UART controls data input and output at a sampling rate of a multiple of one of at least two different numbers.

4. A reader/writer connected to a central information processing system through a communication line and to an external medium for reading and writing data, comprising:

a CPU for processing data;

memory means for storing data;

communication control means for controlling data input and output to and from said central information processing system;

sampling rate switching means for dividing the clock signal sent from said central information processing system through said communication control means by one of at least two different division values in accordance with the designation from said central information processing system through said CPU;

a UART for shaping the waveform of the clock signal generated from said sampling rate switching means, dividing the clock signal by a division value based on the designation from said central information processing system through said CPU to generate a sampling signal, and inputting and outputting data to and from said external medium in accordance with the sampling signal generated; and

connection means for connecting the sections to each other;

wherein said UART controls data input and output at a sampling rate of a multiple of one of at least two different numbers.

5. An IC card system comprising at least one system section for processing data and at least one IC card connected as an external medium to said system section;

wherein at least one of said system section and said IC card each having CPU comprises:

sampling rate switching means for dividing a clock signal by one of at least two different division values in accordance with the designation from said CPU; and

a UART for shaping the waveform of the clock signal generated from said sampling rate switching means, dividing said clock signal by a division value based on the designation from said CPU to a sampling signal, and inputting and outputting data to and from another device in accordance with the sampling signal generated;

wherein said UART controls data input and output at a sampling rate of a multiple of one of at least two different numbers.

# FIG. 1

# FIG. 2

FIG. 3

《 6-DIVISION 》

《 8-DIVISION 》

EP 0 605 751 A1

# FIG. 4

EP 0 605 751 A1

# FIG. 5

# FIG. 6

RESET STATE ———┤├—— RESET RELEASE STATE

# FIG. 7

P10~P17   P20~P27   P30~P37

| PORT CONTROLLER (8) | PORT CONTROLLER (8) | PORT CONTROLLER (8) |

PORT CON-TROL-LER (8)   10

P00 ~ P07

CPU 7   ROM 8   RAM 9   5

PORT CON-TROL-LER (8)   10

P40 ~ P47

| BAUD RATE SETT-ING REGISTER (8)  6 | SAMPLING RATE SETT-ING REGISTER (8)  23 | INPUT BUFFER (8)  4 | OUTPUT BUFFER (8)  3 |

40b

CLK

| BAUD RATE GENERATOR  1a | SAMPLING SIGNAL GENERATION CIRCUIT  22 | SHIFT REGISTER  2 |

I/O

EP 0 605 751 A1

# FIG. 8

CPU 7  ROM 8  RAM 9  EEP ROM 14  14a  60a

CLK
RST
VDD
GND

5

SAMPLING RATE SWITCHING CIRCUIT 24

UART 31a

I/O

# FIG. 9

CPU 7  ROM 8  RAM 9  70

5

COMMUNI- CATION CONTROL CIRCUIT 25

SAMPLING RATE SWITCHING CIRCUIT 24

UART 31a

VDD
GND
I/O
CLK
RST

# FIG. 10

EP 0 605 751 A1

# FIG. 11

```
        ┌─────────────┐
        │    START    │
        └──────┬──────┘
               │
        ┌──────▼──────┐
        │  SET·CARD   │──── S1
        └──────┬──────┘
               │
    ┌──────────▼──────────┐
    │ SUPPLY VDD、GND、RST │──── S2
    │  AND CLK TO IC CARD │
    └──────────┬──────────┘
               │
    ┌──────────▼──────────┐
    │ SEND CARD INFORMATION│──── S3
    │  TO SYSTEM SECTION  │
    └──────────┬──────────┘
               │
    ┌──────────▼──────────┐
    │  SEND INSTRUCTION TO │──── S4
    │  CHANGE BAUD RATE   │
    └──────────┬──────────┘
               │
    ┌──────────▼──────────┐
    │  CHANGE BAUD RATE   │──── S5
    └──────────┬──────────┘
               │
    ┌──────────▼──────────┐
    │  EXECUTE PROCESSING  │──── S6
    └──────────┬──────────┘
               │
    ┌──────────▼──────────┐
    │   DISCHARGE CARD    │──── S7
    └──────────┬──────────┘
               │
        ┌──────▼──────┐
        │    E N D    │
        └─────────────┘
```

# FIG. 12

DISPLAY DEVICE ~15

PROCESSING DEVICE ~16

STORAGE DEVICE ~17

INPUT/ OUTPUT CONTROL DEVICE ~18

VDD
GND
RST
CLK
I/O

CPU 7

ROM 8

RAM 9

EEP ROM 14

5

UART 31a

SAMPLING RATE SWITCHING CIRCUIT 24

50

60a

EP 0 605 751 A1

# F I G. 13

```
        ┌──────────────┐
        │    START     │
        └──────┬───────┘
               │
        ┌──────▼───────┐
        │   SET CARD   │  S1
        └──────┬───────┘
               │
   ┌───────────▼──────────┐
   │ SUPPLY VDD、GND、RST  │  S2
   │   AND CLK TO IC CARD │
   └───────────┬──────────┘
               │
   ┌───────────▼──────────┐
   │ SEND BAUD RATE INFOR-│  S3
   │   MATION TO IC CARD  │
   └───────────┬──────────┘
               │
   ┌───────────▼──────────┐
   │  PERFORM BAUD RATE   │
   │ CORRESPONDENCE PROC- │  S4
   │   ESSING BY IC CARD  │
   └───────────┬──────────┘
               │
   ┌───────────▼──────────┐
   │ SEND CARD INFORMATION│  S5
   │   TO SYSTEM SECTION  │
   └───────────┬──────────┘
               │
   ┌───────────▼──────────┐
   │  EXECUTE PROCESSING  │  S6
   └───────────┬──────────┘
               │
   ┌───────────▼──────────┐
   │   DISCHARGE CARD     │  S7
   └───────────┬──────────┘
               │
        ┌──────▼───────┐
        │    E N D     │
        └──────────────┘
```

23

FIG. 14

# FIG. 15

```
        ┌─────────────┐
        │    START    │
        └─────────────┘
               │
               ▼
   ┌───────────────────────┐
   │       SET CARD        │──── S1
   └───────────────────────┘
               │
               ▼
   ┌───────────────────────┐
   │  SUPPLY VDD、 GND、 RST  │──── S2
   │   AND CLK TO IC CARD  │
   └───────────────────────┘
               │
               ▼
   ┌───────────────────────┐
   │ SEND BAUD RATE INFORMA-│──── S3
   │ TION TO SYSTEM SECTION │
   └───────────────────────┘
               │
               ▼
   ┌───────────────────────┐
   │ PERFORM BAUD RATE COR- │
   │ RESPONDENCE PROCESSING │──── S4
   │ ON SYSTEM SECTION SIDE │
   └───────────────────────┘
               │
               ▼
   ┌───────────────────────┐
   │ SEND CARD INFORMATION  │──── S5
   │   TO SYSTEM SECTION    │
   └───────────────────────┘
               │
               ▼
   ┌───────────────────────┐
   │   EXECUTE PROCESSING   │──── S6
   └───────────────────────┘
               │
               ▼
   ┌───────────────────────┐
   │    DISCHARGE CARD      │──── S7
   └───────────────────────┘
               │
               ▼
        ┌─────────────┐
        │    E N D    │
        └─────────────┘
```

# FIG. 16

CLK
RST
VDD
GND

7 CPU
8 ROM
9 RAM
10 EEP ROM

60b

5

SAMPLING RATE SETTING CIRCUIT

UART

I/O

26

31a

# FIG. 17

7 CPU
8 ROM
9 RAM

70a

5

25 COMMUNI-CATION CONTROL CIRCUIT

26 SAMPLING RATE SETTING CIRCUIT

31a UART

VDD
GND
I/O
CLK
RST

26

# FIG. 18

Upper unit (60b): CPU (7), ROM (8), RAM (9), EEP ROM (14), connected via bus (5); SAMPLING RATE SETTING CIRCUIT (26); UART (31a). Contact terminals: VDD, GND, RST, CLK, I/O.

Lower unit (50b): DISPLAY DEVICE (15), PROCESSING DEVICE (16), STORAGE DEVICE (17); SAMPLING RATE SETTING CIRCUIT (26); UART (31a). Contact terminals: VDD, GND, RST, CLK, I/O.

# FIG. 19

```
        ┌─────────────┐
        │    START    │
        └─────────────┘
               │
        ┌─────────────┐
        │  SET CARD   │──── S1
        └─────────────┘
               │
  ┌──────────────────────────┐
  │  SUPPLY VDD、GND、RST      │──── S2
  │  AND CLK TO IC CARD       │
  └──────────────────────────┘
               │
  ┌──────────────────────────┐
  │  SEND CARD INFORMATION    │──── S3
  │  TO SYSTEM SECTION        │
  └──────────────────────────┘
               │
  ┌──────────────────────────┐
  │   SEND INSTRUCTION        │──── S4
  │  TO CHANGE BAUD RATE      │
  └──────────────────────────┘
               │
  ┌──────────────────────────┐
  │   CHANGE BAUD RATE        │──── S5
  └──────────────────────────┘
               │
  ┌──────────────────────────┐
  │   EXECUTE PROCESSING      │──── S6
  └──────────────────────────┘
               │
  ┌──────────────────────────┐
  │   DISCHARGE CARD          │──── S7
  └──────────────────────────┘
               │
        ┌─────────────┐
        │    E N D    │
        └─────────────┘
```

# FIG. 20

EP 0 605 751 A1

# FIG. 21

```
         ┌─────────────┐
         │    START    │
         └─────────────┘
                │
                ▼
    ┌─────────────────────┐
    │      SET CARD       │  ── S1
    └─────────────────────┘
                │
                ▼
    ┌─────────────────────┐
    │ SUPPLY SIGNAL VDD、  │  ── S2
    │ GND、RST AND CLK TO  │
    │ IC CARD             │
    └─────────────────────┘
                │
                ▼
    ┌─────────────────────┐
    │ SEND BAUD RATE      │  ── S3
    │ INFORMA- TION TO    │
    │ IC CARD             │
    └─────────────────────┘
                │
                ▼
    ┌─────────────────────┐
    │  PERFORM BAUD RATE  │  ── S4
    │   CORRESPONDENCE    │
    │ PROCESSING BY IC CARD│
    └─────────────────────┘
                │
                ▼
    ┌─────────────────────┐
    │ SEND CARD INFORMATION│ ── S5
    │  TO SYSTEM SECTION  │
    └─────────────────────┘
                │
                ▼
    ┌─────────────────────┐
    │ EXECUTE PROCESSING  │  ── S6
    └─────────────────────┘
                │
                ▼
    ┌─────────────────────┐
    │   DISCHARGE CARD    │  ── S7
    └─────────────────────┘
                │
                ▼
         ┌─────────────┐
         │    END      │
         └─────────────┘
```

FIG. 22

# F I G. 23

```
        ┌─────────────┐
        │    START    │
        └─────────────┘
               │
               ▼
   ┌─────────────────────┐
   │      SET CARD       │──── S1
   └─────────────────────┘
               │
               ▼
   ┌─────────────────────┐
   │ SUPPLY VDD、GND、RST │──── S2
   │  AND CLK TO IC CARD │
   └─────────────────────┘
               │
               ▼
   ┌─────────────────────┐
   │ SEND BAUD RATE INFORMA-│── S3
   │ TION TO SYSTEM SECTION │
   └─────────────────────┘
               │
               ▼
   ┌─────────────────────┐
   │ PERFORM BAUD RATE COR-│
   │ RESPONDENCE PROCESSING│── S4
   │ BY SYSTEM SECTION SIDE│
   └─────────────────────┘
               │
               ▼
   ┌─────────────────────┐
   │ SEND CARD INFORMATION│── S5
   │   TO SYSTEM SECTION  │
   └─────────────────────┘
               │
               ▼
   ┌─────────────────────┐
   │  EXECUTE PROCESSING  │── S6
   └─────────────────────┘
               │
               ▼
   ┌─────────────────────┐
   │   DISCHARGE CARD     │── S7
   └─────────────────────┘
               │
               ▼
        ┌─────────────┐
        │    E N D    │
        └─────────────┘
```

EP 0 605 751 A1

# F I G. 24

## PRIOR ART

# FIG. 25    PRIOR ART

EP 0 605 751 A1

# FIG. 26
## PRIOR ART

EP 0 605 751 A1

# FIG. 27

## PRIOR ART

```
        ┌─────────────┐
        │    START    │
        └─────────────┘
               │
               ▼
   ┌───────────────────────┐
   │       SET CARD        │  S1
   └───────────────────────┘
               │
               ▼
   ┌───────────────────────┐
   │ SUPPLY VDD、GND、RST    │  S2
   │  AND CLK TO IC CARD   │
   └───────────────────────┘
               │
               ▼
   ┌───────────────────────┐
   │ SEND CARD INFORMATION │  S3
   │   TO SYSTEM SECTION   │
   └───────────────────────┘
               │
               ▼
   ┌───────────────────────┐
   │   EXECUTE PROCESSING  │  S4
   └───────────────────────┘
               │
               ▼
   ┌───────────────────────┐
   │    DISCHARGE CARD     │  S5
   └───────────────────────┘
               │
               ▼
        ┌─────────────┐
        │    END      │
        └─────────────┘
```

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 498 450 (NEC CORPORATION) <br> * page 3, column 4, line 19 - page 5, column 7, line 37; figures 1,2 * <br> --- | 1,2 | G06F13/38 <br> G06F1/08 |
| Y | GB-A-2 236 603 (WINBOND ELECTRONICS CORP) <br> * page 4, line 23 - page 7, line 6; figures 3,4,6,7 * <br> --- | 1,2 | |
| A | US-A-4 458 308 (HONEYWELL INFORMATION SYSTEMS INC.) <br> * column 2, line 23 - line 45; figures 3,4 * <br> --- | 1 | |
| A | GB-A-2 200 818 (INTEL CORPORATION) <br> * page 19, line 1 - line 6; figure 1 * <br> --- | 2 | |
| A | EP-A-0 446 519 (MITSUBISHI DENKI KABUSHIKI KAISHA) <br> * page 3, column 3, line 45 - column 4, line 28; figure 1 * <br> --- | 3,5 | |
| A | WO-A-92 01259 (MICRO CARD TECHNOLOGIES, INC.) <br> * page 15, line 7 - page 17, line 22; figure 1 * <br> * page 18, line 20 - page 19, line 15; figure 6 * <br> ----- | 4,5 | TECHNICAL FIELDS SEARCHED (Int.Cl.5) <br><br> G06F |

The present search report has been drawn up for all claims

| Place of search | Date of completion of the search | Examiner |
|---|---|---|
| THE HAGUE | 18 April 1994 | Jones, H |